(19) Europäisches Patentamt / European Patent Office / Office européen des brevets

(11) **EP 3 032 325 B1**

(12) **FASCICULE DE BREVET EUROPEEN**

(45) Date de publication et mention
de la délivrance du brevet:
**07.11.2018 Bulletin 2018/45**

(51) Int Cl.:
***G02F 1/225*** *(2006.01)* ***H04B 10/54*** *(2013.01)*

(21) Numéro de dépôt: **15198167.7**

(22) Date de dépôt: **07.12.2015**

(54) **DISPOSITIF DE MODULATION D'AMPLITUDE D'UN SIGNAL OPTIQUE**

VORRICHTUNG ZUR MODULATION DER AMPLITUDE EINES OPTISCHEN SIGNALS

AMPLITUDE MODULATION DEVICE OF AN OPTICAL SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.12.2014 FR 1462073**

(43) Date de publication de la demande:
**15.06.2016 Bulletin 2016/24**

(73) Titulaire: **Commissariat à l'Énergie Atomique
et aux Énergies Alternatives
75015 Paris (FR)**

(72) Inventeurs:
 • **MENEZO, Sylvie
 38500 VOIRON (FR)**
 • **DUBRAY, Olivier
 38100 GRENOBLE (FR)**

(74) Mandataire: **Brevalex
95, rue d'Amsterdam
75378 Paris Cedex 8 (FR)**

(56) Documents cités:
**WO-A1-2014/068197 US-A1- 2008 231 933
US-A1- 2011 158 577 US-A1- 2013 195 394
US-A1- 2014 003 761**

 • **LU Y ET AL: "All-optical format conversions from
NRZ to BPSK and QPSK based on nonlinear
responses in silicon microring resonators",
OPTICS EXPRESS, OSA (OPTICAL SOCIETY OF
AMERICA), WASHINGTON DC, (US); THE
INSTITUTION OF ELECTRICAL ENGINEERS,
STEVENAGE, GB, vol. 15, no. 21, 17 octobre 2007
(2007-10-17), pages 14275-14282, XP002712592,
ISSN: 1094-4087, DOI: 10.1364/OE.15.014275**

**Description**

**DOMAINE TECHNIQUE**

Le domaine de l'invention est celui des modulateurs optiques, et plus particulièrement celui des modulateurs réalisant une modulation d'amplitude multi-niveaux de type PAM (*Pulse Amplitude Modulation*).

**ÉTAT DE LA TECHNIQUE ANTÉRIEURE**

Dans le domaine des transmissions optiques, les techniques de modulation multi-niveaux sont connues. Les bits d'informations peuvent être codés sur l'amplitude et/ou la phase du champ de la porteuse optique.

Lorsque seule l'amplitude du champ optique, E, est modulée, la technique de modulation est dite PAM (*Pulse Amplitude Modulation*). La modulation d'amplitude seule permet de générer une modulation pure d'intensité, sans modulation de phase du champ optique.

La modulation est dite « On Off Keying » lorsque seuls deux niveaux d'intensité optique sont générés : niveau 1 (ON) et niveau 0 (OFF). L'information est alors codée sur 1 bit. La modulation est dite M-PAM, lorsque M niveaux d'intensité sont générés. L'information est alors codée sur N bits, avec $M = 2^N$, avec $N \geq 1$ Ainsi, les 'symboles' sont émis tous les 'T' secondes, chaque symbole transportant N bits. Le débit transmis s'écrit N /T en Bits par Seconde.

A la réception d'une transmission optique M-PAM, un simple photo-détecteur est utilisé, suivi d'un convertisseur analogique / numérique permettant de détecter les différents niveaux d'intensités optiques transmis (niveaux de chaque symbole transmis), et donc les valeurs des N bits portés par chaque symbole d'information.

Une mise en oeuvre d'une telle technique de modulation consiste, au moyen d'un convertisseur numérique-analogique, à convertir N séries ($M = 2^N$) de bits binaires (valeur 0 ou 1) en parallèle, en une série de valeurs analogiques pouvant prendre M niveaux possibles. La sortie du convertisseur numérique-analogique est ensuite connectée à un modulateur électro-optique d'intensité. A la sortie du modulateur, l'intensité optique de la lumière est modulée suivant M niveaux d'intensité optique.

L'utilisation d'un convertisseur numérique-analogique n'apparaît pas satisfaisante notamment du fait de sa consommation. On souhaiterait donc disposer d'un système de modulation PAM ne nécessitant pas de convertisseur numérique-analogique et qui puisse réaliser le codage multi-niveaux directement dans le domaine optique.

Les auteurs de l'article « A 20Gb/s NRZ/PAM-4 1V Transmitter in 40nm CMOS Driving a Si-Photonic Modulator in 0.13$\mu$m CMOS" (DOI: 10.1109/ISSCC.2013.6487667 Conference: Solid-State Circuits Conference Digest of Technical Papers (ISSCC), 2013 IEEE International) ont à cet égard proposé un système de modulation PAM-M constitué d'un interféromètre de Mach Zehnder comprenant, dans chacun des deux bras, N sections de modulation de phase de longueurs différentes ($M = 2^N$) et d'une section supplémentaire d'accord de phase pour accorder la différence de phase entre les 2 bras. Ainsi, afin d'effectuer une modulation PAM-4, on retrouve dans chacun des bras de l'interféromètre Mach Zehnder deux sections de modulation de phase de longueurs différentes et une section d'accord de phase. Il faut donc contrôler au total l'activation de quatre sections de modulation de phase. Les longueurs différentes des sections de modulation de phase entraînent des propriétés différentes, notamment en termes de vitesse et de transmission. Ils en découlent des pertes différentes qu'il est nécessaire d'égaliser pour garantir une bonne opération du système.

Le document US 2011/158577 A1 un dispositif optique de modulation QPSK ou QAM dans lequel la puissance optique est divisée à travers un diviseur de puissance vers deux bras qui se recombinent à travers un combineur de puissance optique, et dans lequel les bras sont déphasés et incluent chacun un modulateur électro-optique d'amplitude.

Le document US 2013/158577 A1 présente un dispositif de modulation QAM présentant deux paires de bras réalisant chacune une modulation QPSK. On retrouve dans chaque bras des sections de modulation de longueurs différentes permettant d'obtenir des puissances de sortie différentes.

**EXPOSÉ DE L'INVENTION**

L'invention vise à proposer une architecture de modulateur PAM ouverte en ce sens que différentes implémentations en sont possibles permettant d'utiliser différents types de modulateurs, et notamment des modulateurs de petite taille tels que des modulateurs en anneaux résonnants.

L'invention propose un procédé de modulation d'amplitude d'une porteuse optique, selon la revendication 1, et dont un aspect préféré est défini dans la revendication 2.

L'invention propose également un dispositif photonique de modulation d'amplitude d'une porteuse optique selon la revendication 3.

Certains aspects préférés mais non limitatifs de ce dispositif sont définis dans les revendications dépendantes 4 à 9.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma représentant un dispositif conforme à l'invention ;
- les figures 2a et 2b représentent des niveaux d'intensité optique en sortie d'un dispositif conforme à l'invention ;
- la figure 3 est un schéma d'un dispositif selon un mode de réalisation de l'invention utilisant des interféromètres Mach Zehnder en tant que modulateurs d'amplitude ;
- la figure 4 est un schéma représentant une variante de modulateur optique selon l'invention permettant d'appliquer une modulation d'amplitude PAM à un jeu de porteuses optiques multiplexées en longueurs d'onde ;
- les figures 5a et 5b représentent deux modes de réalisation possibles d'un modulateur d'amplitude sous la forme d'un arrangement de deux anneaux résonnants en série et en configuration push-pull pouvant être utilisé dans le dispositif selon l'invention.

## EXPOSÉ DÉTAILLÉ DE MODES DE RÉALISATION PARTICULIERS

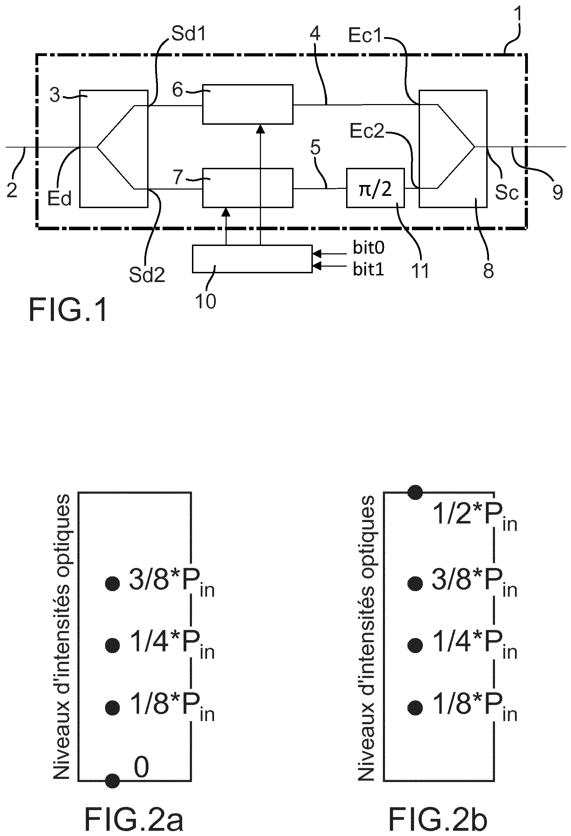

En référence à la figure 1, l'invention porte sur un dispositif photonique 1 permettant de coder un flux d'information par modulation d'amplitude d'une porteuse optique. Ce dispositif de modulation d'amplitude d'une porteuse optique est dénommé modulateur PAM par la suite et permet d'effectuer une modulation PAM-4 sur une porteuse optique d'entrée de longueur d'onde $\lambda_0$. La porteuse optique en sortie du modulateur PAM 1 présente un niveau d'intensité parmi quatre niveaux d'intensité optique possibles, ce niveau d'intensité étant fonction de la valeur d'un signal numérique codé sur deux bits bit1, bit0.

Le modulateur PAM 1 comprend un diviseur de puissance optique 3 disposant d'une entrée Ed pouvant être couplée, en optique guidée, à un guide d'ondes d'entrée 2 pour recevoir la porteuse optique d'entrée de longueur d'onde $\lambda_0$, à moduler en amplitude. Le diviseur 3 dispose d'une paire de sorties Sd1, Sd2. Le diviseur optique 3 est un diviseur 50:50 fournissant sur chacune de ces sorties Sd1, Sd2 50% de la puissance optique de la porteuse optique d'entrée.

En sortie du diviseur 3, les champs optiques $E_{4in}$, $E_{5in}$ sur chacune des sorties Sd1, Sd2 sont les suivants, en considérant que le diviseur est sans pertes : $E_{4in} = \sqrt{\dfrac{P_{in}}{2}}$ , $E_{5in} = \sqrt{\dfrac{P_{in}}{2}}$ avec $P_{in}$ la puissance de la porteuse optique en entrée du diviseur 3.

Chacune des sorties Sd1, Sd2 du diviseur 3 est couplée à une entrée d'un modulateur 6, 7. La sortie de chacun des modulateurs 6, 7 est couplée à une entrée EC1, EC2 d'un combineur de puissance optique 8. Le combineur 8 dispose d'une sortie Sc sur laquelle on retrouve la porteuse optique de sortie modulée en amplitude. Un guide d'ondes de sortie 9 peut être couplé à la sortie Sc du combineur 8 pour assurer, en optique guidée, la propagation du signal optique modulé.

Les modulateurs 6, 7 sont des modulateurs électro-optiques d'amplitude, et plus particulièrement des modulateurs effectuant une modulation de l'amplitude du champ optique sans modulation de phase (modulateurs dits « sans chirp »).

Les modulateurs 6, 7 sont identiques. Ils présentent donc des pertes similaires. Les pertes dans les deux bras étant ainsi rigoureusement bien balancées, il n'est pas nécessaire de venir prévoir des moyens dédiés à leur égalisation.

Un bras 4, respectivement 5, par ailleurs également appelé trajet optique, relie le port de sortie Sd1, respectivement Sd2, du diviseur 3, au port d'entrée Ec1, respectivement Ec2, du combineur 8, par l'intermédiaire du modulateur 6, respectivement 7. Les trajets optiques peuvent être réalisés en optique libre, ou encore en optique guidée ou fibrée.

L'un des bras, le bras 5 dans l'exemple de la figure 1, comporte en outre un déphaseur optique 11 permettant de déphaser de $\pi/2$ les porteuses optiques se propageant respectivement dans les bras 4 et 5.

Un générateur 10 de tensions de commande des modulateurs 6 et 7 reçoit en entrée le signal numérique à transmettre codé sur deux bits, soit deux séries de bits à transmettre: série de bits 'bits0' et série de bits 'bits1'. Le générateur 10 génère des tensions de commande des modulateurs 6 et 7 qui sont fonction de la valeur des bits de la série 'bits0' et de la série 'bits1' respectivement :

- ainsi, pour le modulateur 6, une première tension de commande est générée qui peut prendre deux niveaux $V_{A_h}$ et $V_{A_b}$ correspondant respectivement à un bit de valeur « 1 » ou de valeur « 0 » de la série de bits 'bits0' ;
- ainsi, pour le modulateur 7, une seconde tension de commande est générée qui peut prendre deux niveaux $V_{B_h}$ et $V_{B_b}$ correspondant respectivement à un bit de valeur « 1 » ou de valeur « 0 » de la série de bits 'bits1'.

EP 3 032 325 B1

Le générateur de tensions de commande 10 dispose ainsi d'une loi de commande pour chacun des modulateurs 6, 7 à même de définir la tension de commande à appliquer à chacun des modulateurs 6, 7 en fonction de la valeur des bits des séries 'bits0' et 'bits1'. Ces lois de commande sont caractérisées par deux niveaux de tensions : $V_{A_h}$, $V_{A_b}$ pour le modulateur d'amplitude 6 (dit premier modulateur) et $V_{B_h}$, $V_{B_b}$ pour le modulateur d'amplitude 7 (dit second modulateur).

L'invention est en cela également relative à un procédé de modulation d'amplitude d'une porteuse optique, comprenant la génération et l'application, à chacun des modulateurs électro-optiques d'amplitude du dispositif selon l'invention d'une tension de commande fonction de la valeur d'un bit d'une série de bits bits0, bits1 à transmettre.

Le modulateur PAM 1 selon l'invention prend ainsi la forme d'un interféromètre de Mach Zehnder dont les deux bras 4, 5 sont déphasés de $\pi/2$ et comprennent chacun un modulateur d'amplitude 6, 7. Le modulateur PAM 1 met en oeuvre une modulation PAM-4 soit 4 niveaux d'amplitude du champ optique, sans changement de phase entre les 4 niveaux d'amplitude, et donc correspondant à 4 niveaux distincts d'intensité de l'onde optique. On ne retrouve qu'une seule section de modulation d'amplitude par bras.

Les modulateurs d'amplitude 6, 7 peuvent être des modulateurs à électro-absorption. Alternativement, les modulateurs d'amplitude 6, 7 peuvent être des modulateurs en configuration push-pull, par exemple des modulateurs Mach Zehnder en configuration push-pull, ou encore des modulateurs prendre la forme d'un arrangement de deux anneaux résonnants en série en configuration push-pull tel que par exemple décrit dans la demande de brevet français déposée le 02/09/2013 et publiée le 6 mars 2015 sous le n°3 010 196. La configuration push-pull permet d'éliminer le chirp puisque le chirp introduit dans l'un des bras d'un modulateur Mach Zehnder, respectivement dans l'un des anneaux en série, est compensé par le chirp introduit dans l'autre des bras, respectivement dans l'autre des anneaux.

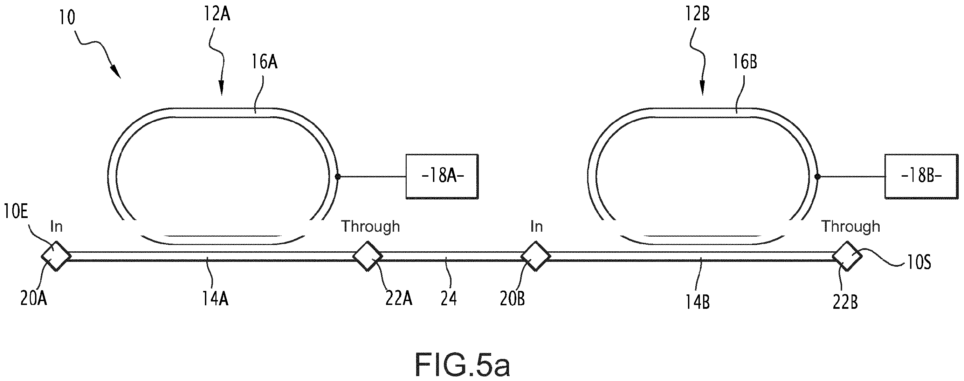

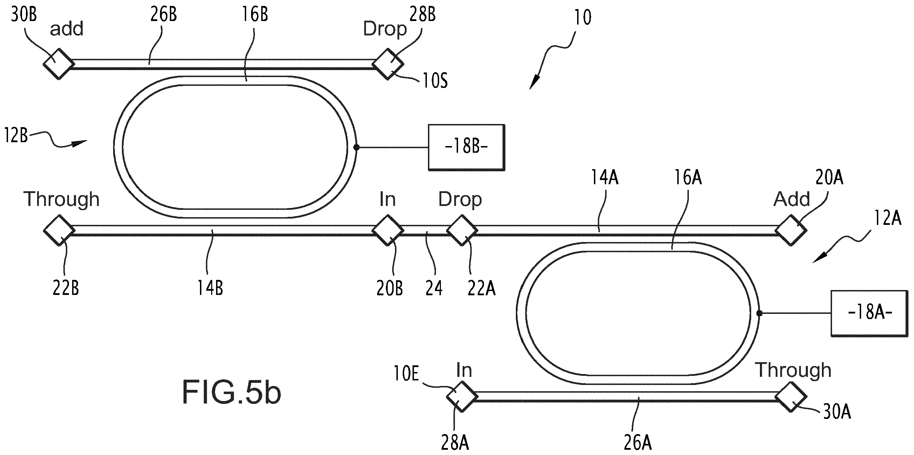

L'utilisation de modulateurs prenant la forme d'un arrangement de deux anneaux résonnants en série et en configuration push-pull est privilégiée, notamment du fait de leur taille réduite. Deux exemples de réalisation d'un tel modulateur où le chirp introduit à un premier anneau est compensé par le chirp introduit au second anneau sont représentés sur les figures 5a et 5b.

Le modulateur 10 comporte un premier modulateur 12A en anneau résonant et un deuxième modulateur 12B en anneau résonant.

Le premier modulateur 12A comporte un premier guide d'ondes 14A, un premier guide d'ondes en anneau 16A, dit premier anneau 16A et un premier dispositif de commande 18A.

Le premier guide d'ondes 14A présente une entrée 20A et une sortie 22A. La forme du premier guide d'ondes 14A est quelconque.

Dans le cas de la figure 1, à titre d'exemple, l'entrée 20A est le port In et la sortie 22A est le port Through.

Le premier anneau 16A est couplé optiquement au premier guide d'ondes 14A.

Le premier anneau 16A présente un premier indice effectif Neff1.

Le premier dispositif de commande 18A est propre à moduler le premier indice effectif Neff1 du premier anneau 16A selon une première loi de commande L1.

De manière similaire, le deuxième modulateur 12B comporte un deuxième guide d'ondes 14B, un deuxième guide d'ondes en anneau 16B, dit deuxième anneau 16B et un deuxième dispositif de commande 18B.

Le deuxième guide d'ondes 14B présente des propriétés similaires aux propriétés décrites pour le premier guide d'ondes 14A. Notamment, le deuxième guide d'ondes 14B présente une entrée 20B et une sortie 22B.

L'entrée 20B du deuxième guide d'ondes 14B est reliée à la sortie 22A du premier guide d'ondes 14A. Une telle propriété permet que le signal optique en sortie du modulateur 10 soit influencé à la fois par le premier anneau 16A et le deuxième anneau 16B.

Le deuxième dispositif de commande 18B est propre à moduler le deuxième indice effectif Neff2 du deuxième anneau 16B selon une deuxième loi de commande L2.

Plusieurs configurations sont possibles pour relier l'entrée 20B du deuxième guide d'ondes 14B à la sortie 22A du premier guide d'ondes 14A.

Dans le cas de la figure 5a, à titre d'exemple, l'entrée 20B du deuxième guide d'ondes 14B est le port In du deuxième modulateur 12B et la sortie 22B du deuxième guide d'ondes 14B est le port Through du deuxième modulateur 12B. Le modulateur 10 comprend un guide d'ondes intermédiaire 24. Le guide d'ondes intermédiaire 24 relie le port In 20B du deuxième guide d'ondes 14B au port Through 22A du premier guide d'ondes 14A. Dans cette configuration, l'entrée 10E du modulateur 10 est le port In 20A du premier modulateur 12A et la sortie 10S du modulateur 10 est le port Through 22B du deuxième modulateur 12B.

Selon une deuxième configuration illustrée par la figure 5b, chaque modulateur 12A, 12B comporte deux guides d'ondes couplé chacun optiquement à leur anneau 16A, 16B respectif. Ainsi, le premier modulateur 12A en anneau résonant comporte le premier guide d'ondes 14A qui s'étend entre le port Add 20A et le port Drop 22A et le troisième guide d'ondes 26A qui s'étend entre le port In 28A et le port Through 30A. Similairement, le deuxième modulateur 12B en anneau résonant comporte le deuxième guide d'ondes 14B qui s'étend entre le port In 20B et le port Through 22B et le quatrième guide d'ondes 26B qui s'étend entre le port Drop 28B et le port Add 30B . Le modulateur 10 comprend, également, un guide d'ondes intermédiaire 24 reliant le port Drop 22A du premier modulateur 12A au port In 20B du deuxième modulateur 14B. Dans cette deuxième configuration, l'entrée 10E du modulateur 10 est le port In 28A du premier modulateur 12A et la sortie 10S du modulateur 10 est le port Add 30B du deuxième modulateur 12B.

Selon une troisième configuration non représentée, le premier guide d'ondes 14A et le deuxième guide d'ondes 14B sont confondus. Dans cette troisième configuration, l'entrée 10E du modulateur 10 est à la fois le port In du premier modulateur 15 12A et le port In du deuxième modulateur 12B tandis que la sortie 10S du modulateur 10 est à la fois le port Through du premier modulateur 12A et le port Through du deuxième modulateur 12B.

Dans ces trois configurations, à chaque fois, l'entrée 20B du deuxième guide d'ondes 14B est reliée à la sortie 22A du premier guide d'ondes 14A.

On choisit de préférence des modulateurs en anneau 12A, 12B identiques, c'est-à-dire des modulateurs présentant des paramètres de couplage identiques. La première loi de commande L1 et la deuxième loi de commande L2 sont alors choisies telles que lorsque le premier indice effectif Neff1 varie d'une première quantité ΔNeff1, le deuxième indice effectif Neff2 varie d'une deuxième quantité ΔNeff2 opposée à la première quantité -ΔNeff1. A titre d'exemple, les lois de commande L1 et L2 sont deux tensions de modulation reproduisant la série de bits à transmettre en opposition de phase. De ce fait, les deux modulateurs 12A et 12B sont dits modulés en push-pull. Pour de telles lois de commande, en fonctionnement, le modulateur 10 est tel que le paramètre de chirp introduit par le premier modulateur 12A est opposé au paramètre de chirp introduit par le deuxième modulateur. Le modulateur 10 est ainsi apte à fournir en sortie un signal optique modulé dont la phase n'est pas modulée.

On détaille ci-après le calcul permettant de déterminer les lois de tension de commande $V_{A_h}$, $V_{A_b}$ (respectivement $V_{B_h}$, $V_{B_b}$) à appliquer sur le premier modulateur 6 (respectivement le second modulateur 7), afin d'obtenir, en sortie du modulateur PAM 1, 4 niveaux d'intensité distincts, sans modulation de phase de la porteuse optique en entrée. En sortie du premier modulateur 6, les deux niveaux d'amplitude des champs optiques associés aux tensions $V_{A_h}$ et $V_{A_b}$ sont notés $E_{6h}$ et $E_{6b}$ :

$$E_{6h} = A_h * E_{4in}$$

$$E_{6b} = A_b * E_{4in}$$

Où $A_h$ et $A_b$ sont des constantes réelles représentant les ratios de modulation d'amplitude du premier modulateur 6.

En sortie du second modulateur 7, les deux niveaux des champs optiques associés aux tensions $V_{B_h}$ et $V_{B_b}$ sont notées $E_{7h}$ et $E_{7b}$:

$$E_{7h} = B_h * E_{5in}$$

$$E_{7b} = B_b * E_{5in}$$

Où $B_h$ et $B_b$ sont des constantes réelles représentant les ratios de modulation d'amplitude du second modulateur 7.

En sortie du modulateur PAM 1, les 4 niveaux d'amplitude de la porteuse optique $E_{niveau1}$, $E_{niveau2}$, $E_{niveau3}$, $E_{niveau4}$ obtenus s'écrivent comme suit:

$$E_{niveau1} = (A_h + \exp(j.\frac{\pi}{2}) * B_h) * \frac{\sqrt{P_{in}}}{2}$$

$$E_{niveau2} = (A_h + \exp(j.\frac{\pi}{2}) * B_b) * \frac{\sqrt{P_{in}}}{2}$$

$$E_{niveau3} = (A_b + \exp(j.\frac{\pi}{2}) * B_h) * \frac{\sqrt{P_{in}}}{2}$$

$$E_{niveau4} = (A_b + \exp(j.\frac{\pi}{2}) * B_b) * \frac{\sqrt{P_{in}}}{2}$$

Où $\exp(j.\frac{\pi}{2})$ représente le déphasage apporté par le déphaseur 11.

Les 4 niveaux d'amplitude de la porteuse optique en sortie du modulateur PAM 1 $E_{niveau1}$, $E_{niveau2}$, $E_{niveau3}$, $E_{niveau4}$ correspondent respectivement à 4 niveaux de puissance optiques $P_{niveau1}$, $P_{niveau2}$, $P_{niveau3}$, $P_{niveau4}$ :

$$P_{niveau1} = (A_h^2 + B_h^2) * \frac{P_{in}}{4}$$

$$P_{niveau2} = (A_h^2 + B_b^2) * \frac{P_{in}}{4}$$

$$P_{niveau3} = (A_b^2 + B_h^2) * \frac{P_{in}}{4}$$

$$P_{niveau4} = (A_b^2 + B_b^2) * \frac{P_{in}}{4}$$

De façon à réaliser une modulation PAM-4 dans laquelle les 4 niveaux d'intensité sont identiquement espacés, il faut respecter l'une des égalités suivantes :

$$P_{niveau1} = 0.75 * \frac{P_{in}}{2}, P_{niveau2} = 0.5 * \frac{P_{in}}{2}, P_{niveau3} = 0.25 * \frac{P_{in}}{2}, P_{niveau4} = 0$$

ou bien $P_{niveau1} = \frac{P_{in}}{2}$, $P_{niveau2} = 0.75 * \frac{P_{in}}{2}$, $P_{niveau3} = 0.5 * \frac{P_{in}}{2}$, $P_{niveau4} = 0.25 * \frac{P_{in}}{2}$ Les solutions sont respectivement: $Solution\ 1: A_h = 1\,, A_b = 0, B_h = \sqrt{\frac{1}{2}}, B_b = 0,$ ou

$$Solution\ 2 : A_h = 1\,, A_b = 0, B_h = 1, B_b = \sqrt{\frac{1}{2}}.$$

On a représenté sur les figures 2a et 2b les différents niveaux d'intensité pouvant être obtenus en sortie du modulateur PAM 1, avec prise en considération de la division de puissance de 50%. La figure 2a est associée à la solution 1 ci-dessus, la figure 2b est associée à la solution 2 ci-dessus.

Ainsi, dans une réalisation de l'invention visant une modulation PAM-4 à niveaux d'intensité identiquement espacés, le générateur de tensions de commande 10 est configuré (solution 1) :

- lorsque la valeur du bit de la série 'bit0' est « 1 », respectivement « 0 », pour générer une première tension de commande $V_{A_h}$, respectivement $V_{A_b}$, telle que le premier modulateur 6 vient modifier l'amplitude de la porteuse optique selon un ratio sortie/entrée de 1, respectivement 0 ;
- lorsque la valeur du bit de la série 'bit1' est « 1 », respectivement « 0 », pour générer une seconde tension de commande $V_{B_h}$, respectivement $V_{B_b}$, telle que le second modulateur 7 vient modifier l'amplitude de la porteuse optique selon un ratio sortie/entrée de $\sqrt{\frac{1}{2}}$, respectivement 0.

Et, dans une autre réalisation possible de l'invention visant une modulation PAM-4 à niveaux d'intensité identiquement espacés, le générateur de tensions de commande 10 est configurée (solution 2) :

- lorsque la valeur du bit de la série 'bit0' est « 1 », respectivement « 0 », pour générer une première tension de commande $V_{Ah}$, respectivement $V_{Ab}$, telle que le premier modulateur 6 vient modifier l'amplitude de la porteuse optique selon un ratio sortie/entrée de 1, respectivement 0 ;
- lorsque la valeur du bit de la série 'bit1' est « 1 », respectivement « 0 », pour générer une seconde tension de commande $V_{Bh}$, respectivement $V_{Bb}$, telle que le second modulateur 7 vient modifier l'amplitude de la porteuse optique selon un ratio sortie/entrée de 1, respectivement $\sqrt{\dfrac{1}{2}}$.

On décrit par la suite une manière de déterminer les niveaux $V_{Ah}$, $V_{Ab}$ de la tension de commande du premier modulateur 6, et les niveaux $V_{Bh}$, $V_{Bb}$ de la tension de commande du second modulateur 7 qui permettent de générer les ratio d'amplitude sortie/entrée $A_h$, $A_b$, $B_h$ et $B_b$, dans un exemple de réalisation de l'invention où les modulateurs d'amplitude 6, 7 sont des modulateurs de Mach Zehnder en configuration push-pull.

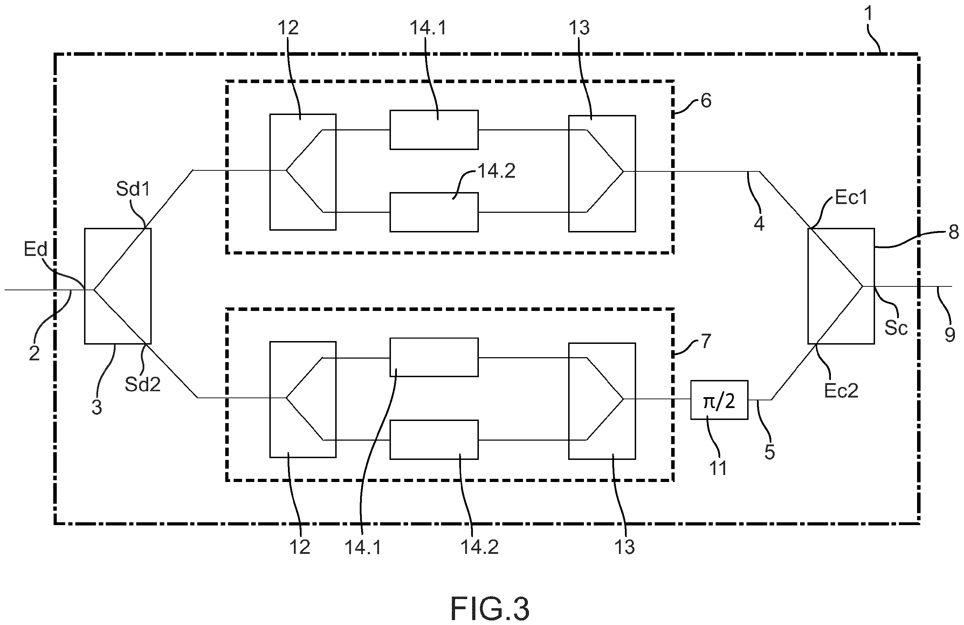

Cet exemple de réalisation est illustré sur la figure 3. Chaque modulateur de Mach Zehnder 6, 7 est composé d'un diviseur d'intensité optique 12 (diviseur 1 entrée vers 2 sorties, 50:50), d'un combineur d'intensité optique 13 (2 entrées vers 1 sortie) et, dans chaque bras du modulateur Mach Zehnder, d'une section de modulation de phase optique 14-1, 14-2.

Lorsque la section de modulation de phase optique 14-1 d'un bras se voit appliquer une tension $V_1$, la section de modulation de phase optique 14-2 de l'autre bras se voit appliquer une tension $V_2$ tel que $V_1 = -V_2$ (utilisation en configuration push pull). Ainsi, on considérera que la tension de commande d'un modulateur d'amplitude 6, 7 est la suivante $V_{in} = -\dfrac{V_2(t)}{2} = \dfrac{V_1(t)}{2}$.

La fonction de transfert d'un modulateur Mach Zehnder 6, 7 en configuration push pull est donnée ci-dessous :

$$P_{out\_mod}(t) = \cos^2\left(\frac{V_{in}(t)}{2V_\pi}\pi\right) * P_{in\_mod}$$

$$E_{out\_mod}(t) = \cos\left(\frac{V_{in}(t)}{2V_\pi}\pi\right) * E_{in\_mod}$$

Avec $E_{out\_mod}$ et $E_{in\_mod}$ les amplitudes de la porteuse optique en sortie/entrée du modulateur 6,7, $P_{out\_mod}$ et $P_{in\_mod}$ les puissances optiques de la porteuse optique en sortie/entrée du modulateur 6,7, $V_\pi$ la tension nécessaire pour produire un déphase de $\pi$ dans les sections de modulation de phase 14-1, 14-2, $V_{in}$ la tension de commande du modulateur 6, 7 qui varie entre $[0, V_\pi]$.

En sortie du modulateur PAM 1 de la figure 3, l'amplitude optique et l'intensité optique sont calculées comme précédemment :

$$E_{out} = \frac{1}{2}\left(\cos\left(\frac{V_{inA}}{2*V_\pi}\pi\right)*j + \cos\left(\frac{V_{inB}}{2*V_\pi}\pi\right)\right)*E_{in}$$

$$P_{out} = \frac{1}{4}\left(\cos^2\left(\frac{V_{inA}}{2*V_\pi}\pi\right) + \cos^2\left(\frac{V_{inB}}{2*V_\pi}\pi\right)\right)*P_{in}$$

Avec $E_{out}$ et $E_{in}$ les amplitudes de la porteuse optique en sortie/entrée du modulateur PAM-4, $P_{out}$ et $P_{in}$ les puissances optiques de la porteuse optique en sortie/entrée du modulateur PAM 1, $V_\pi$ la tension nécessaire pour produire un déphase de $\pi$ dans les sections de modulation 14-1, 14-2 de phase, $V_{inA}$ la tension de commande du premier modulateur 6 qui varie dans la gamme $[0, V_\pi]$, $V_{inB}$ la tension du second modulateur 7 qui varie dans la gamme $[0, V_\pi]$.

Afin de créer 4 niveaux d'intensité identiquement espacés, les deux solutions possibles sont les suivantes.

Solution 1 :

$$A_h = \cos\left(\frac{V_{inAh}}{2 * V_\pi}\pi\right) = 1 \,, A_b = \cos\left(\frac{V_{inAb}}{2 * V_\pi}\pi\right) = 0,$$

$$B_h = \cos\left(\frac{V_{inBh}}{2 * V_\pi}\pi\right) = \sqrt{\frac{1}{2}}, B_b = \cos\left(\frac{V_{inBb}}{2 * V_\pi}\pi\right) = 0$$

Solution 2 :

$$A_h = \cos\left(\frac{V_{inAh}}{2 * V_\pi}\pi\right) = 1 \,, A_b = \cos\left(\frac{V_{inAb}}{2 * V_\pi}\pi\right) = \sqrt{\frac{1}{2}},$$

$$B_h = \cos\left(\frac{V_{inBh}}{2 * V_\pi}\pi\right) = 1, B_b = \cos\left(\frac{V_{inBh}}{2 * V_\pi}\pi\right) = 0$$

Avec $V_{inAh}$ la tension de commande du premier modulateur 6 lorsque la valeur du bit de la série bit0 est 1, et $V_{inAb}$ la tension de commande du premier modulateur 6 lorsque la valeur du bit de la série bit0 est 0,

Avec $V_{inBh}$ la tension de commande du second modulateur 7 lorsque la valeur du bit de la série bit1 est 1, et $V_{inBb}$ la tension de commande du second modulateur 7 lorsque la valeur du bit de la série bit1 est 0.

Les tensions de commande sont alors les suivantes.

$$\text{Solution 1}: V_{inAh} = 0, V_{inAb} = V_\pi, V_{inBh} = \frac{V_\pi}{2}, V_{inBb} = 0,$$

permettant l'obtention des niveaux de sorties :

$$P_{niveau1} = 0.75 * P_{in} \text{ (application de } V_{inAh}\text{et } V_{inBh}),$$

$$P_{niveau2} = 0.5 * P_{in} \text{ (application de } V_{inAh}\text{et } V_{inBb}),$$

$$P_{niveau3} = 0.25 * P_{in} \text{ (application de } V_{inAb}\text{et } V_{inBh}),$$

$$P_{niveau4} = 0 \text{ (application de } V_{inAb}\text{et } V_{inBb}).$$

$$\text{Solution 2}: V_{inAh} = 0, V_{inAb} = \frac{V_\pi}{2}, V_{inBh} = 0, V_{inBb} = V_\pi$$

permettant l'obtention des niveaux de sorties :

$$P_{niveau1} = P_{in} \text{ (application de } V_{inAh}\text{et } V_{inBh})$$

$$P_{niveau2} = 0.75 * P_{in} \text{ (application de } V_{inAh}\text{et } V_{inBb}),$$

$$P_{niveau3} = 0.5 * P_{in} \text{ (application de } V_{inAb}\text{et } V_{inBh}),$$

$$P_{niveau4} = 0,25*P_{in} \text{ (application de } V_{inAb} \text{ et } V_{inBb}).$$

Ainsi, dans un mode de réalisation possible de l'invention visant une modulation PAM-4 à niveaux d'intensité identiquement espacés, le générateur 10 est configuré (solution 1) :

- lorsque la valeur du bit de la série bit0 est « 1 », respectivement « 0 », pour appliquer au premier modulateur 6 une tension de commande à 0, respectivement à $V_\pi$, pour venir modifier l'amplitude de la porteuse optique selon un ratio sortie/entrée de 1, respectivement 0 ;

  - - lorsque la valeur du bit de la série bit1 est « 1 », respectivement « 0 », pour appliquer au second modulateur 7 une tension de commande à $\frac{V_\pi}{2}$, respectivement 0, pour venir modifier vient modifier l'amplitude de la porteuse optique selon un ratio sortie/entrée de $\sqrt{\frac{1}{2}}$, respectivement 0.

Cette loi de commande est résumée dans le tableau ci-dessous.

| bit0 | bit1 | Tension de commande du premier modulateur 6 | Ratio de modulation du premier modulateur 6 | Tension de commande du second modulateur 7 | Ratio de modulation du second modulateur 7 | Niveau de sortie |
|---|---|---|---|---|---|---|
| 0 | 0 | $V_\pi$ | 0 | 0 | 0 | 0 |
| 0 | 1 | $V_\pi$ | 0 | $\frac{V_\pi}{2}$ | $\sqrt{\frac{1}{2}}$ | 0,25*Pin |
| 1 | 0 | 0 | 1 | 0 | 0 | 0,5*Pin |
| 1 | 1 | 0 | 1 | $\frac{V_\pi}{2}$ | $\sqrt{\frac{1}{2}}$ | 0,75*Pin |

Et, dans un autre mode de réalisation possible de l'invention visant une modulation PAM-4 à niveaux d'intensité identiquement espacés, le générateur 10 est configuré (solution 1) :

- lorsque la valeur du bit de la série bit0 est « 1 », respectivement « 0 », pour appliquer au premier modulateur 6 une tension de commande à 0, respectivement à $\frac{V_\pi}{2}$, pour venir modifier l'amplitude de la porteuse optique selon un ratio sortie/entrée de 1, respectivement 0 ;

  - - lorsque la valeur du bit de la série bit1 est « 1 », respectivement « 0 », pour appliquer au second modulateur 7 une tension de commande à 0, respectivement $V_\pi$, pour venir modifier vient modifier l'amplitude de la porteuse optique selon un ratio sortie/entrée de 1, respectivement $\sqrt{\frac{1}{2}}$.

Cette loi de commande est résumée dans le tableau ci-dessous.

| bit0 | bit1 | Tension de commande du premier modulateur 6 | Ratio de modulation du premier modulateur 6 | Tension de commande du second modulateur 7 | Ratio de modulation du second modulateur 7 | Niveau de sortie |
|---|---|---|---|---|---|---|
| 0 | 0 | $\dfrac{V_\pi}{2}$ | 0 | $V_\pi$ | $\sqrt{\dfrac{1}{2}}$ | 0,25*Pin |
| 0 | 1 | $\dfrac{V_\pi}{2}$ | 0 | 0 | 1 | 0,5*Pin |
| 1 | 0 | 0 | 1 | $V_\pi$ | $\sqrt{\dfrac{1}{2}}$ | 0,75*Pin |
| 1 | 1 | 0 | 1 | 0 | 1 | Pin |

Dans les deux lois de commande, le modulateur d'amplitude de l'un des bras 4, 5 est piloté par une tension de commande à 0 ou à une tension Vmax ($V_\pi$) et le modulateur d'amplitude de l'autre des bras est piloté par une tension de commande à 0 ou à Vmax/2, de manière à permettre l'obtention d'une modulation PAM-4 à quatre niveaux de sortie identiquement espacés.

Dans une variante de l'invention, le modulateur PAM applique une modulation PM-4 à un jeu de porteuses optiques multiplexées en longueurs d'onde, les porteuses optiques étant de longueurs d'ondes différentes $\lambda 1$, $\lambda 2$, $\lambda 3$.

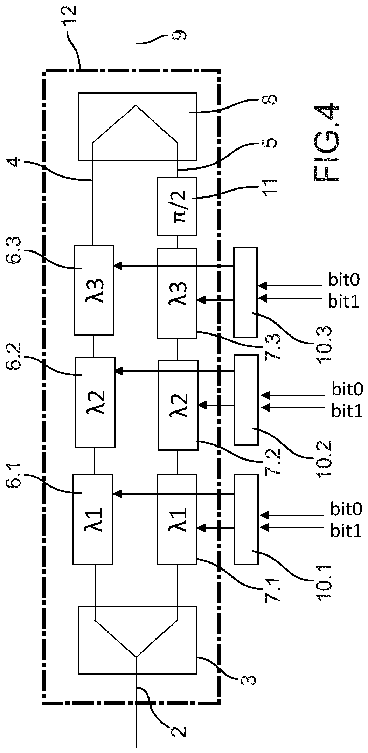

On a représenté sur la figure 4 un tel modulateur PAM multi-longueurs d'onde 12. Son architecture est identique à celle du modulateur PAM 1 discuté jusqu'à présent. Il en diffère en ce que chaque bras de modulation 4, 5 comporte une pluralité de modulateurs d'amplitude 6-1, 6-2, 6-3 et 7-1, 7-2, 7-3 sélectifs en longueurs d'ondes pour ne moduler qu'une seule des longueurs d'ondes $\lambda 1$, $\lambda 2$, $\lambda 3$, du jeu de porteuses optiques d'entrée multiplexées en longueur d'ondes. Sur l'exemple de la figure 4, on retrouve ainsi sur chacun des bras 4, 5 un modulateur 6-1, 7-1 modulant sélectivement la longueur d'onde $\lambda 1$, un modulateur 6-2, 7-2 modulant sélectivement la longueur d'onde $\lambda 2$ et un modulateur 6-3, 7-3 modulant sélectivement la longueur d'onde $\lambda 3$. Et on retrouve un générateur de tension de commande 10-1, 10-2, 10-3 pour chacune des longueurs d'onde $\lambda 1$, $\lambda 2$, $\lambda 3$, chargé d'appliquer à chacun des modulateurs 6-1, 7-1 ; 6-2, 7-2 ; 6-3, 7-3 auquel il est associé une tension de commande fonction de la valeur d'un bit d'une série de bits 'bit0', 'bit1' correspondante.

Dans le cadre de cette variante, on utilise de préférence, du fait de leur bonne sélectivité en longueur d'ondes, des modulateurs d'amplitude constitués par l'arrangement de deux anneaux résonnants en série et en configuration push-pull.

Une modulation PAM multi-longueurs d'ondes est ainsi réalisée à l'aide d'un seul interféromètre Mach Zehnder. Cette variante s'avère donc avantageuse, notamment par comparaison avec le système de modulation PAM-M décrit dans l'article discuté en introduction qui nécessiterait de dupliquer l'interféromètre de Mach Zehnder portant les multiples sections de modulation de phase pour chacune des longueurs d'onde.

**Revendications**

1. Procédé de modulation d'amplitude d'une porteuse optique dans un dispositif photonique comprenant un diviseur de puissance optique (3) dans lequel la puissance de la porteuse optique est divisée vers deux bras (4, 5) qui se recombinent à travers un combineur de puissance optique (8), dans lequel les bras (4, 5) sont déphasés de $\pi/2$ et incluent chacun un modulateur électro-optique d'amplitude (6, 7),
le procédé étant **caractérisé en ce qu'**il comprend les étapes de génération et d'application, à chacun des modulateurs électro-optiques d'amplitude (6, 7), d'une tension de commande fonction de la valeur d'un bit d'une série de bits (bits0, bits1) à transmettre selon:

   ◦ lorsque le bit de la série de bits (bit0) associée au modulateur (6) de l'un des bras (4) est de valeur 0, respectivement 1, la tension de commande appliquée audit modulateur (6) vient modifier l'amplitude de la porteuse optique selon un ratio sortie/entrée de 0, respectivement 1 ;

◦ lorsque le bit de de la série de bits (bit1) associée au modulateur (7) de l'autre des bras (5) est de valeur 0, respectivement 1, la tension de commande appliquée audit modulateur (7) de l'autre des bras (5) vient modifier l'amplitude de la porteuse optique selon un ratio sortie/entrée de 0, respectivement $\sqrt{\frac{1}{2}}$, ou selon un ratio sortie/entrée de $\sqrt{\frac{1}{2}}$, respectivement 1.

2. Procédé selon la revendication 1, dans lequel la tension de commande appliquée au modulateur de l'un des bras est à 0 ou à une tension Vmax et la tension de commande appliquée au modulateur de l'autre des bras est à 0 ou à Vmax/2.

3. Dispositif photonique (1, 12) de modulation d'amplitude d'une porteuse optique, dans lequel la puissance de la porteuse optique est divisée à travers un diviseur de puissance optique (3) vers deux bras (4, 5) qui se recombinent à travers un combineur de puissance optique (8), dans lequel les bras (4, 5) sont déphasés de $\pi/2$ et incluent chacun un modulateur électro-optique d'amplitude (6, 7), et comprenant un générateur (10) de tensions de commande pour appliquer à chacun des modulateurs (6, 7) une tension de commande fonction de la valeur d'un bit d'une série de bits (bit0, bit1) associée au modulateur, **caractérisé en ce que** ledit générateur (10) est configuré pour mettre en oeuvre les étapes de génération et d'application d'une tension de commande du procédé selon la revendication 1.

4. Dispositif selon la revendication 3, dans lequel le diviseur optique est un diviseur 50:50.

5. Dispositif selon l'une des revendications 3 et 4, dans lequel les modulateurs électro-optiques d'amplitude (6, 7) sont des modulateurs d'amplitude sans modulation de phase.

6. Dispositif selon la revendication 5, dans lequel les modulateurs électro-optiques d'amplitude (6, 7) comprennent chacun un arrangement de deux anneaux résonnants en série et en configuration push-pull.

7. Dispositif selon la revendication 5, dans lequel les modulateurs électro-optiques d'amplitude (6, 7) sont des modulateurs à électro-absorption.

8. Dispositif selon la revendication 5, dans lequel les modulateurs électro-optiques d'amplitude (6, 7) sont des modulateurs Mach Zehnder en configuration push pull.

9. Dispositif (12) selon l'une des revendications 3 à 8, dans lequel chaque bras (4, 5) comprend une pluralité de modulateurs électro-optiques d'amplitude sélectifs en longueurs d'ondes (6-1, 6-2, 6-3, 7-1, 7-2, 7-3), les modulateurs (6-1, 6-2, 6-3) de l'un des bras étant chacun accordé à l'une d'une pluralité de longueurs d'ondes différente ($\lambda$1, $\lambda$2, $\lambda$3) et les modulateurs (7-1, 7-2, 7-3) de l'autre des bras étant chacune accordé à l'une de ladite pluralité de longueurs d'ondes différente ($\lambda$1, $\lambda$2, $\lambda$3).

**Patentansprüche**

1. Verfahren zur Amplitudenmodulation eines optischen Trägers in einer photonischen Vorrichtung, umfassend einen optischen Leistungsteiler (3), in dem die Leistung des optischen Trägers in Richtung von zwei Armen (4, 5) geteilt wird, die mittels eines optischen Leistungskombinierers (8) rekombinieren, wobei die Arme (4, 5) um $\pi/2$ phasenversetzt sind und jeweils einen elektrooptischen Amplitudenmodulator (6, 7) enthalten, wobei das Verfahren **dadurch gekennzeichnet ist, dass** es die Schritte des Erzeugens und des Anlegens einer Steuerspannung an jeden der elektrooptischen Amplitudenmodulatoren (6, 7) umfasst, die eine Funktion des Werts eines Bits einer zu übertragenden Reihe von Bits (bits0, bits1) wie folgt ist:

o wenn das Bit der Reihe von Bits (bit0), die dem Modulator (6) eines der Arme (4) zugeordnet ist, den Wert 0 beziehungsweise 1 hat, modifiziert die Steuerspannung, die an den Modulator (6) angelegt wird, die Amplitude des optischen Trägers gemäß einem Ausgangs-/Eingangsverhältnis von 0 beziehungsweise 1;
o wenn das Bit der Reihe von Bits (bit1), die dem Modulator (7) des anderen der Arme (5) zugeordnet ist, den Wert 0 beziehungsweise 1 hat, modifiziert die Steuerspannung, die an den Modulator (7) des anderen der Arme (5) angelegt wird, die Amplitude des optischen Trägers gemäß einem Ausgangs-/Eingangsverhältnis von 0 beziehungsweise $\sqrt{\frac{1}{2}}$, oder gemäß einem Ausgangs-/ Eingangsverhältnis von $\sqrt{\frac{1}{2}}$ beziehungsweise 1.

**2.** Verfahren nach Anspruch 1, bei dem die Steuerspannung, die an den Modulator des einen der Arme angelegt wird, bei 0 oder einer Spannung Vmax ist, und die Steuerspannung, die an den Modulator des anderen der Arme angelegt wird, bei 0 oder bei Vmax/2 ist.

**3.** Photonische Vorrichtung (1, 12) zur Amplitudenmodulation eines optischen Trägers, bei der die Leistung des optischen Trägers mittels eines optischen Leistungsteilers (3) in Richtung von zwei Armen (4, 5) geteilt wird, die mittels eines optischen Leistungskombinierers (8) rekombinieren, wobei die Arme (4, 5) um $\pi$/2 phasenversetzt sind und jeweils einen elektrooptischen Amplitudenmodulator (6, 7) enthalten, und umfassend einen Generator (10) für Steuerspannungen, um an jeden der Modulatoren (6, 7) eine Steuerspannung anzulegen, die eine Funktion des Werts eines Bits einer Reihe von Bits (bit0, bit1) ist, die dem Modulator zugeordnet ist, **dadurch gekennzeichnet, dass** der Generator (10) dazu ausgelegt ist, die Schritte des Erzeugens und des Anlegens einer Steuerspannung des Verfahrens nach Anspruch 1 auszuführen.

**4.** Vorrichtung nach Anspruch 3, bei der der optische Teiler ein 50:50-Teiler ist.

**5.** Vorrichtung nach einem der Ansprüche 3 und 4, bei der die elektrooptischen Amplitudenmodulatoren (6, 7) Amplitudenmodulatoren ohne Phasenmodulation sind.

**6.** Vorrichtung nach Anspruch 5, bei der die elektrooptischen Amplitudenmodulatoren (6, 7) jeweils eine Anordnung von zwei Resonanzkreisen in Reihe und in einer Push-Pull-Konfiguration umfassen.

**7.** Vorrichtung nach Anspruch 5, bei der die elektrooptischen Amplitudenmodulatoren (6, 7) Elektroabsorptionsmodulatoren sind.

**8.** Vorrichtung nach Anspruch 5, bei der die elektrooptischen Amplitudenmodulatoren (6, 7) Mach-Zehnder-Modulatoren in einer Push-Pull-Konfiguration sind.

**9.** Vorrichtung (12) nach einem der Ansprüche 3 bis 8, bei der jeder Arm (4, 5) eine Mehrzahl von elektrooptischen wellenlängenselektiven Amplitudenmodulatoren (6-1, 6-2, 6-3, 7-1, 7-2, 7-3) umfasst, wobei die Modulatoren (6-1, 6-2, 6-3) des einen der Arme jeweils einer aus einer Mehrzahl von verschiedenen Wellenlängen ($\lambda$1, $\lambda$2, $\lambda$3) zugewiesen sind, und die Modulatoren (7-1, 7-2, 7-3) des anderen der Arme jeweils einer von der Mehrzahl von verschiedenen Wellenlängen ($\lambda$1, $\lambda$2, $\lambda$3) zugewiesen sind.

**Claims**

**1.** Method for amplitude modulation of an optical carrier in a photonic device which comprises an optical power splitter (3) in which the power of the optical carrier is split through into two arms (4, 5) which recombine through an optical power combiner (8), in which the arms (4, 5) are phase shifted by $\pi$/2 and each include an electro-optical amplitude modulator (6, 7),
the method being **characterized in that** it includes the steps of generating and applying, to each of the electro-optical amplitude modulators (6, 7), a control voltage depending on the value of a bit of a bit series (bits0, bits1) to transmit,

  ∘ when the bit of the bit series (bits0) associated with the modulator (6) of one of the arms (4) is of value 0, respectively 1, the control voltage applied to said modulator (6) modifies the amplitude of the optical carrier according to an output/input ratio of 0, respectively 1;
  ∘ when the bit of the bit series (bits1) associated with the modulator (7) of the other of the arms (5) is of value 0, respectively 1, the control voltage applied to said modulator (7) of the other of the arms (5) modifies the amplitude of the optical carrier according to an output/input ratio of 0, respectively $\sqrt{\frac{1}{2}}$, or according to an output/input ratio of $\sqrt{\frac{1}{2}}$, respectively 1.

2. Method according to claim 1, wherein the control voltage applied to the modulator of one of the arms is at 0 or at a voltage Vmax and the control voltage applied to the modulator of the other of the arms is at 0 or at Vmax/2.

3. Photonic device (1, 12) for amplitude modulation of an optical carrier, in which the power of the optical carrier is split through an optical power splitter (3) into two arms (4, 5) which recombine through an optical power combiner (8), in which the arms (4, 5) are phase shifted by $\pi/2$ and each include an electro-optical amplitude modulator (6, 7), and comprising a control voltages generator (10) to apply to each of the modulators (6, 7) a control voltage which depends on the value of a bit of a bit series (bit0, bit1) associated with the modulator, **characterized in that** said generator (10) is configured to perform the steps of generating and applying a control voltage of the method of claim 1.

4. Device according to claim 3, in which the optical splitter is a 50:50 splitter.

5. Device according to one of claims 3 and 4, in which the electro-optical amplitude modulators (6, 7) are amplitude modulators without phase modulation.

6. Device according to claim 5, in which the electro-optical amplitude modulators (6, 7) each include an arrangement of two resonant rings in series and in push-pull configuration.

7. Device according to claim 5, in which the electro-optical amplitude modulators (6, 7) are electro-absorption modulators.

8. Device according to claim 5, in which the electro-optical amplitude modulators (6, 7) are Mach Zehnder modulators in push-pull configuration.

9. Device according to one of claims 3 to 8, in which each arm (4, 5) includes a plurality of wavelength selective electro-optical amplitude modulators (6-1, 6-2, 6-3, 7-1, 7-2, 7-3), the modulators (6-1, 6-2, 6-3) of one of the arms each being tuned to one of a plurality of different wavelengths ($\lambda1$, $\lambda2$, $\lambda3$) and the modulators (7-1, 7-2, 7-3) of the other of the arms each being tuned to one of said plurality of different wavelengths ($\lambda1$, $\lambda2$, $\lambda3$).

FIG.1

FIG.2a

FIG.2b

FIG.3

EP 3 032 325 B1

FIG.4

FIG.5a

FIG.5b

EP 3 032 325 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011158577 A1

- US 2013158577 A1

**Littérature non-brevet citée dans la description**

- A 20Gb/s NRZ/PAM-4 1V Transmitter in 40nm CMOS Driving a Si-Photonic Modulator in 0.13$\mu$m CMOS. Conference: Solid-State Circuits Conference Digest of Technical Papers (ISSCC). IEEE International, 2013